# EUROPEAN PATENT APPLICATION

(11) **EP 1 577 819 A1**
(43) Date of publication of application: **21.09.2005**
(21) Application number: 05250375.2
(22) Date of filing: 26.01.2005
(51) Int. Cl.: G06F 17/60

(54) **Advertising management system and method of operation**

(30) Priority: 26.01.2004 US 539237 P
(71) Applicant: Quad/Graphics, Inc., Sussex, WI 53089 (US)
(72) Inventor: Parnau, Jeremy P., Mukwonago, WI 53149 (US)
(74) Representative: Every, David Aidan

(57) **Abstract**

The invention provides an advertising management system. The system integrates a service provider network with a client network via a network, such as, the Internet to enter, store, use, revise and synchronize advertising material, such as meta-data and images, using advertisement management software.

## Description

### RELATED APPLICATION

This application is a non-provisional application of U.S. Provisional Patent application serial number 60/539,237, filed January 26, 2004. The contents of Application No. 60/539,237 are hereby incorporated by reference.

### BACKGROUND

Publishers, such as magazine publishers and the like, often utilize advertisement management software to manage advertising within magazine titles. Such software is a stand-alone program implemented only by the publisher. Publishers also use issue planning software that may or may not interface with their advertisement management software.

Publishers receive insertion orders, such as advertisements, from third parties such as advertising agencies. The insertion orders contain actual production details without the physical materials that comprise the advertisement.

The publisher eventually receives the advertisement materials, such as CDs, proofs, films and the like, for the insertion order(s) in a package from the advertising agency. The publisher often handles the materials in-house. The publisher identifies the details of the package contents and logs the details of the materials into the advertisement management software. The publisher and advertising agency thereafter compare the materials logged into the advertisement management software with the insertion order. The materials are also checked for quality (termed preflight) and sometimes converted into appropriate file formats. After preflight, the publisher sends the materials to various locations, such as a printer, for processing of the materials into a magazine.

### SUMMARY

The invention provides an advertising management system. The system integrates a service provider with a client via a network, such as, the Internet to enter, store, use, revise and synchronize advertising material, such as meta-data and images, using advertisement management software common to the service provider and the client.

With the advertising management system, the service provider can provide the following functions as part of the service network: advertising processing, file inspection, digital proofing, distribution and ad archival. Specifically with respect to advertising processing, the service provider can receive, log in and process all of the physical advertising material on the publisher's behalf. Publishers therefore no longer have to handle disks, proofs, and other advertising material supplied by an agency unless they choose to. Packages of advertising material can be delivered to the service provider, rather than the publisher, and can be entered into production using the common advertisement management software. In this work flow, the need for publisher involvement in-house in material handling is reduced thereby saving time and money for the publisher and increasing efficiency since the meta-data and images from the advertising material is available to the publisher via the advertisement management software. The meta-data and images are made available to the publisher in-house without the need for publisher material handling and preflight in-house. By providing integration between the client and the service to provide all the advertising material including meta-data and images in real time, publishers can work more efficiently.

When packages are received by the service provider from an ad agency, the meta-data and images are logged into the advertisement management software using the service network and preflight is performed. The service provider can create image files, such as JPEG files, at a requested resolution. The meta-data and images are uploaded to the publisher via the Internet for the publisher's use. At the publisher, the advertising material arrives electronically in an incoming material bin portion of the advertisement management software. The publisher can then drag-and-drop to associate the advertising material with the data already in their advertisement management system from the insertion order. Once this association is made, all changes, cancellations, revisions, notes, and the like are relayed back and synchronized with the service provider network. Any changes made to the advertising material on either the service provider's end or the publisher's end are automatically synchronized to the other end.

Further, once at the publisher, the electronic advertising material can be inserted into and synchronized with issuing planning software. It should be noted that any changes to the advertising material made by the service provider flow through the integrated system and down to the page level in the issue planning software.

In one embodiment, the invention provides an advertising management system comprising an automated system including a server and a database, a client system operable to communicate with the automated system, and a service provider system operable to communicate with the automated system, wherein the client system and the service provider system bilaterally communicate via the automated system to exchange real-time advertisement data.

In another embodiment, the invention provides a computer-implemented method of integrating advertisements between a client and a service provider. The method comprises the acts of generating an advertisement data record, the client electronically receiving the advertisement data record, the client approving the advertisement data record, and the service provider electronically receiving the approved advertisement data record and generating a production plan.

In yet another embodiment, the invention provides a computer-implemented method of generating advertisements in a printed publication. The method comprises the acts of generating an advertisement data record, automatically updating the advertisement data record when the advertisement data record is modified, and displaying the updated advertisement data record at two separate entities regardless of which entity updated the advertisement data record.

In another embodiment, the invention provides an advertising management system comprising an automated system including a server and a database, a client system for maintaining advertisement data, and a service provider system operable to communicate with the client system via the automated system, the server including a computer program operable to synchronize data transmitted between the client system and the service provider system.

In another embodiment, the invention provides an advertising management system comprising a first entity, a second entity, and a database operable to transmit advertising data between the first entity and the second entity, the database operable to synchronize the advertising data between the first entity and the second entity, the first entity and the second entity operable to view the same advertising data regardless of whether the first entity or the second entity has made changes to the advertising data.

In another embodiment, the invention provides an advertising management system comprising a network, a server, and a database operated by a first entity to manage advertising data and a computer terminal operated by a second entity, the computer terminal operable to access the network to view the same advertising data that the first entity views.

Other aspects of the invention will become apparent by consideration of the detailed description and accompanying drawings.

### BRIEF DESCRIPTION OF THE DRAWINGS

FIG. 1 is a schematic of an advertising management system according to one embodiment of the invention.

FIG. 2 is a block diagram of a software program that can be used in the advertising management system of FIG. 1.

FIG. 3 is a screen of the software program of FIG. 2.

FIG. 4 is a screen of the software program of FIG. 2.

FIG. 5 is a screen of the software program of FIG. 2.

FIG. 6 is a screen of the software program of FIG. 2.

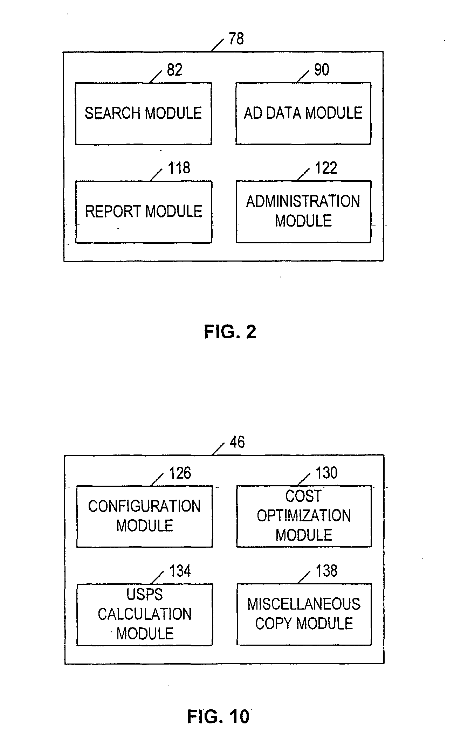

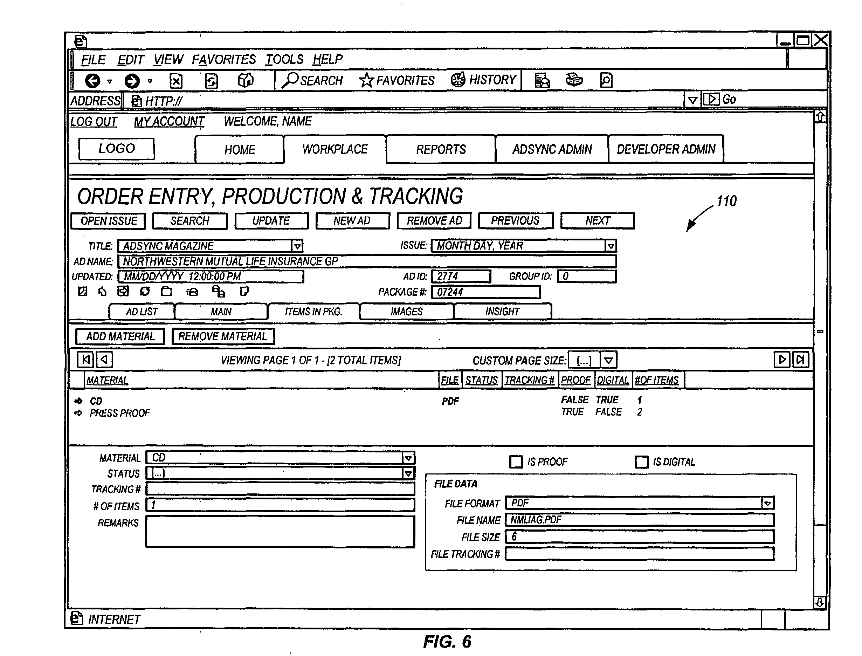

FIG. 6 is a screen of the software program of FIG. 2.

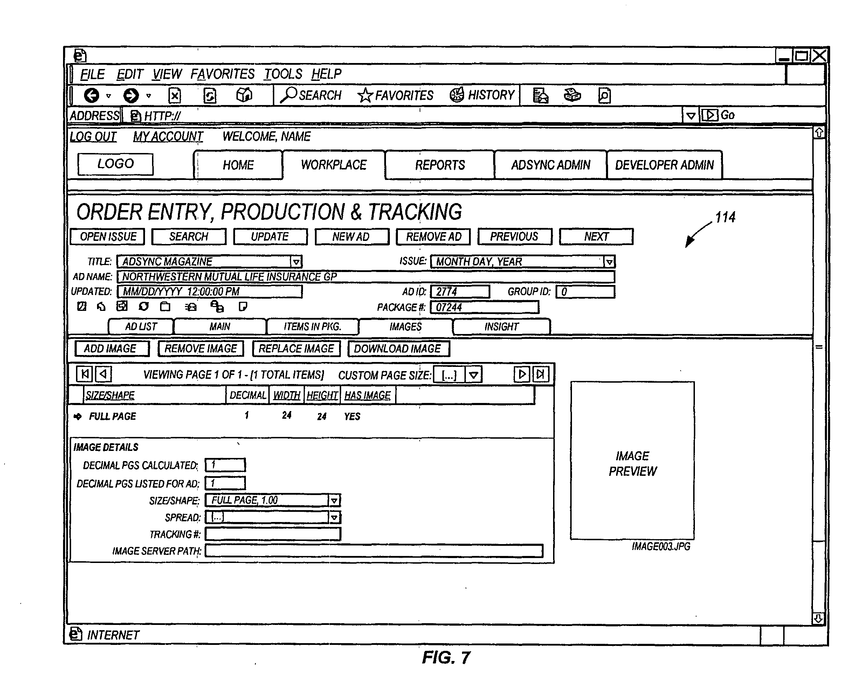

FIG. 7 is a screen of the software program of FIG. 2.

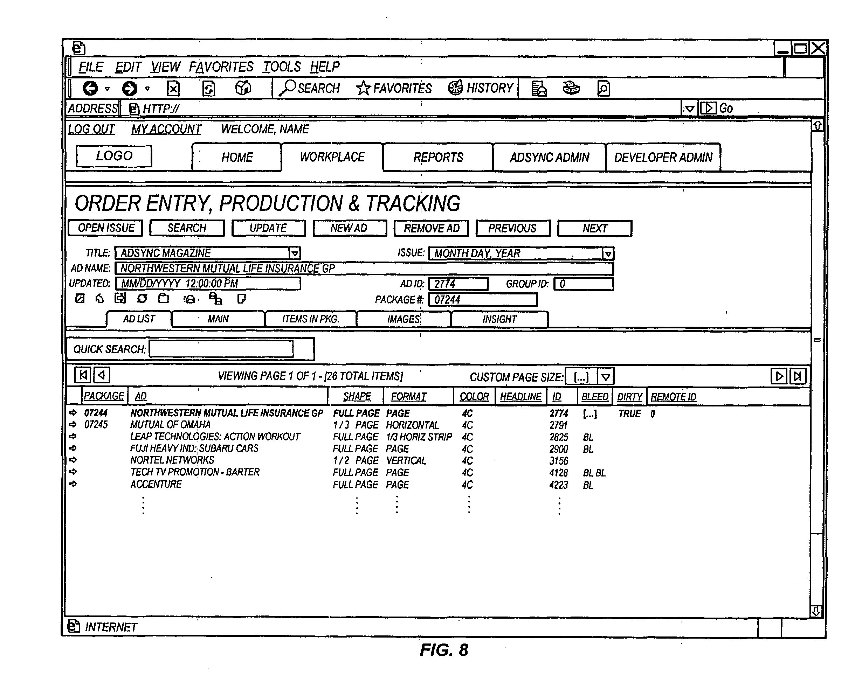

FIG. 8 is a screen of the software program of FIG. 2.

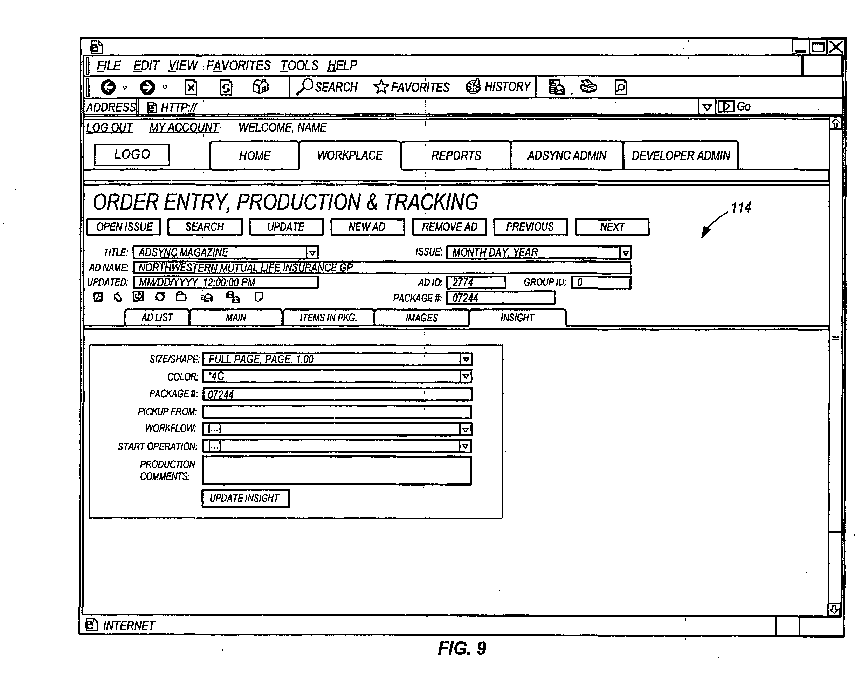

FIG. 9 is a screen of the software program of FIG. 2.

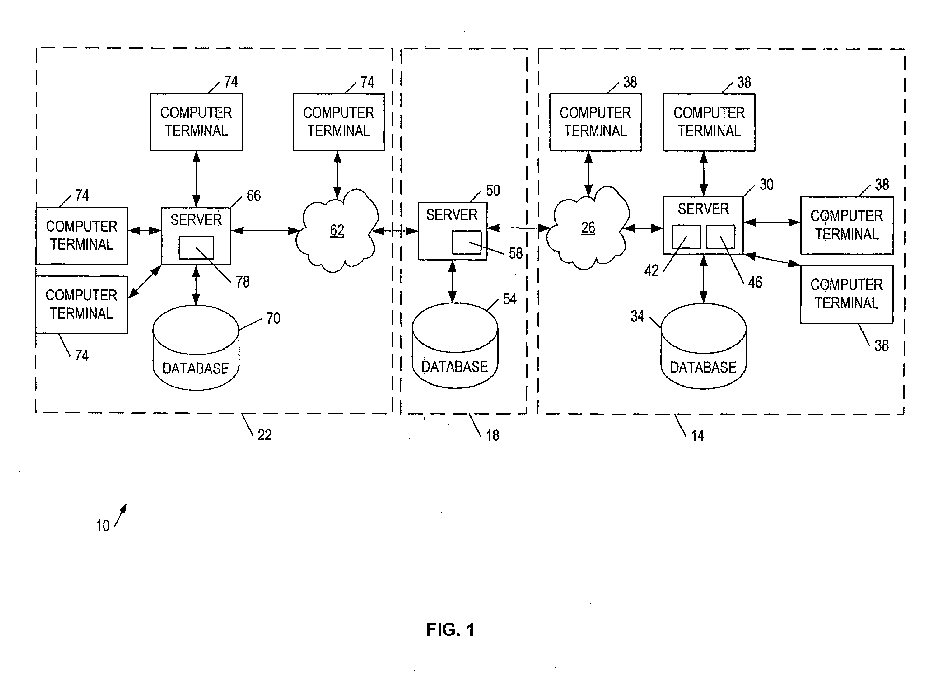

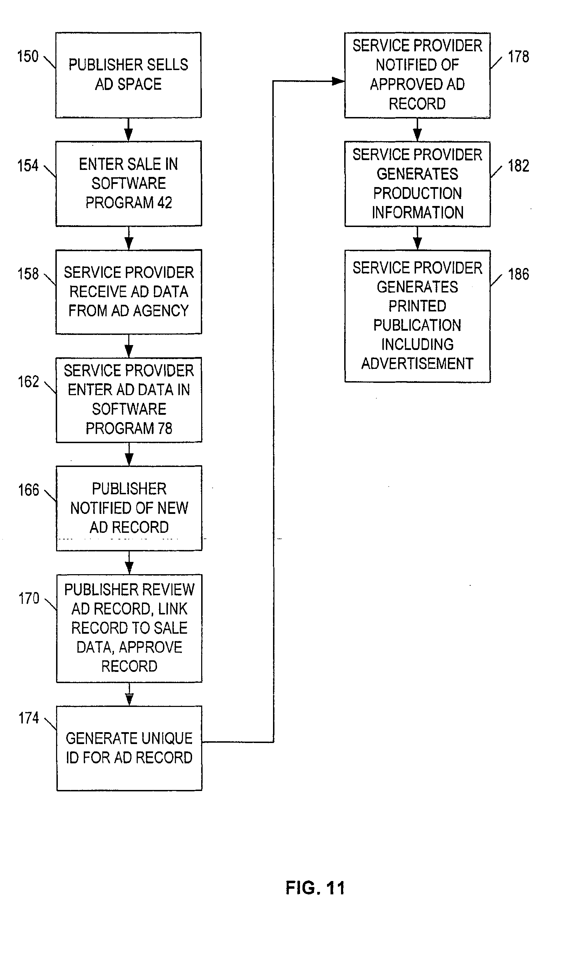

FIG. 10 is a block diagram of a software program that can be used in the advertising management system of FIG. 1.

FIG. 11 is a flow chart illustrating the general advertising management process.

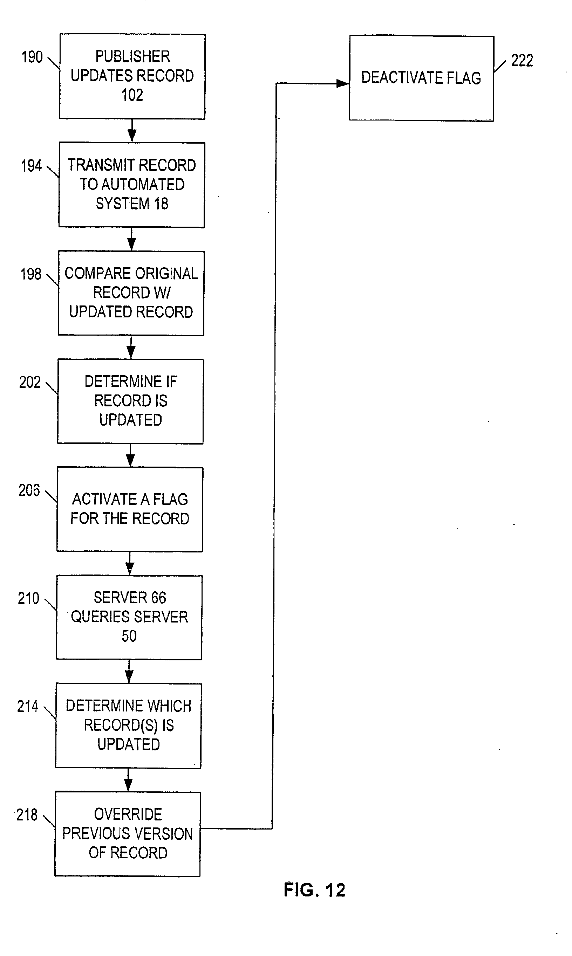

FIG. 12 is a flow chart illustrating the operation of the advertising management system of FIG. 1.

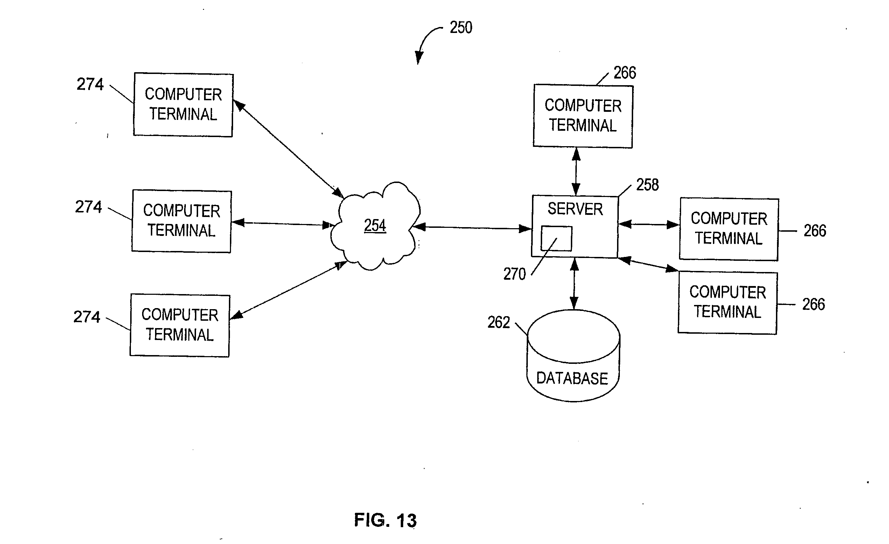

FIG. 13 is a a schematic of an advertising management system according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

In addition, it should be understood that embodiments of the invention include both hardware and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software. As such, it should be noted that a plurality of hardware and software based devices, as well as a plurality of different structural components may be utilized to implement the invention. Furthermore, and as described in subsequent paragraphs, the specific mechanical configurations illustrated in the drawings are intended to exemplify embodiments of the invention and that other alternative mechanical configurations are possible.

FIG. 1 illustrates an advertising management system 10 according to one embodiment of the invention. The advertising management system 10 includes a client system 14, an automated system 18, and a service provider system 22. The client system 14 is generally operated by a publisher. This description uses the words publisher and client interchangeably but the client system 14 could be operated by an agent of the publisher or any type of business entity or person. The client system 14 includes a network 26 that communicates with the automated system 18 and a server 30. The network 26 can be built according to any networking technology or topology or combinations of technologies and topologies and can include multiple sub-networks. Connections between the systems shown in FIG. 1 can be made through local area networks ("LANs"), wide area networks ("WANs"), public switched telephone networks ("PSTNs"), Intranets, the Internet, or any other suitable networks.

The client system 14 also includes a database 34 and a plurality of computer terminals 38. The database 34 stores data and information related to advertisements and the operations of the client system 14. The database 34 can run Microsoft SQL Server 2000. The client system 14 can include fewer or more computer terminals 38 than illustrated in Fig. 1. The computer terminals 38 can include typical hardware such as a processor, I/O interfaces, and storage devices or memory. The computer terminals 38 can also include input devices such as a keyboard and a mouse. The computer terminals 38 can further include standard output devices, such as a monitor. In addition, the computer terminals 38 can include or be connected to and communicate with peripherals, such as a printer and a scanner. The computer terminals 38 can include software such as an operating system, a display application, a communications application, and other software as necessary or desired.

The server 30 can include an operating system for running various software programs an/or a communications application. The server 30 can be a standard Windows file server. The server 30 includes a software program 42 (discussed below) that operates to communicate with the network 26. The software program 42 also operates to communicate with and be accessed by the computer terminals 38. The server 30 can also include a software program 46 (discussed below) that operates to communicate with the network 26 and the computer terminals 38.

The automated system 18 includes a server 50 and a database 54. The server 50 communicates with the network 26 and the service provider system 22. The server 50 can include an operating system for running various software programs an/or a communications application. The server 50 can be a Windows file transfer protocol ("FTP") or a transmission control protocol ("TCP") server. The server 50 includes one or more software programs 58 that operate to communicate with the network 26 and the service provider system 22. The database 54 stores data and information related to advertisements and communications between the client system 14 and the service provider system 22. The database 54 can run Microsoft SQL Server 2000.

The service provider system 22 includes a network 62 that communicates with the automated system 18 and a server 66. The service provider system 22 is generally operated by a manufacturer of printed publications, e.g., magazines, signatures, brochures, and the like. For example, the service provider system 22 can be managed by Quad/Graphics, Inc. of Sussex, Wisconsin under its ARMDirect™ suite of services, but the service provider system 22 can be managed and/or operated by any business entity or person. The network 62 can be built according to any networking technology or topology or combinations of technologies and topologies and can include multiple sub-networks. Connections between the systems shown in FIG. 1 can be made through local area networks ("LANs"), wide area networks ("WANs"), public switched telephone networks ("PSTNs"), Intranets, the Internet, or any other suitable networks.

The service provider system 22 also includes a database 70 and a plurality of computer terminals 74. The database 70 stores data and information related to advertisements and the operations of the service provider system 22. The database 70 can run Microsoft SQL Server 2000. The service provider system 22 can include fewer or more computer terminals 74 than illustrated in Fig. 1. The computer terminals 74 can include typical hardware such as a processor, I/O interfaces, and storage devices or memory. The computer terminals 74 can also include input devices such as a keyboard and a mouse. The computer terminals 74 can further include standard output devices, such as a monitor. In addition, the computer terminals 74 can include or be connected to and communicate with peripherals, such as a printer and a scanner. The computer terminals 74 can include software such as an operating system, a display application, a communications application, and other software as necessary or desired.

The server 66 can include an operating system for running various software programs an/or a communications application. The server 66 can be a standard Windows file server. The server 66 includes a software program 78 (discussed below) that operates to communicate with the network 62. The software program 78 also operates to communicate with and be accessed by the computer terminals 74.

The two-way arrows in FIG. 1 generally represent two-way communication and information transfer between the systems 14, 18, and 22 and components shown in FIG. 1.

The software programs 42 and 78 are generally the same software program. An example of such a software program is AdSync™ software available from the Impoze Partnership, Sussex, Wisconsin. It is noted that other advertisement management software could be utilized with the present invention. The software programs 42 and 78 generally provide the same functionality to the client system 14 and the service provider system 22, respectively. The software programs 42 and 78 can interface with and operate with additional software on the client system 14 and the service provider system 22, respectively, that can be unique to the client system 14 and the service provider system 22. The software program 42 and 78 can integrate various functions of an advertising management process, from advertising sales to production of the printed publication. For example, the software program 42 and 78 can integrate account management, advertising sales, order entry, forecasting, order management, media management, production, billing and reporting. The software program 78 will be discussed herein, however, it should be noted that the software program 42 generally operates in the same manner, unless otherwise specified.

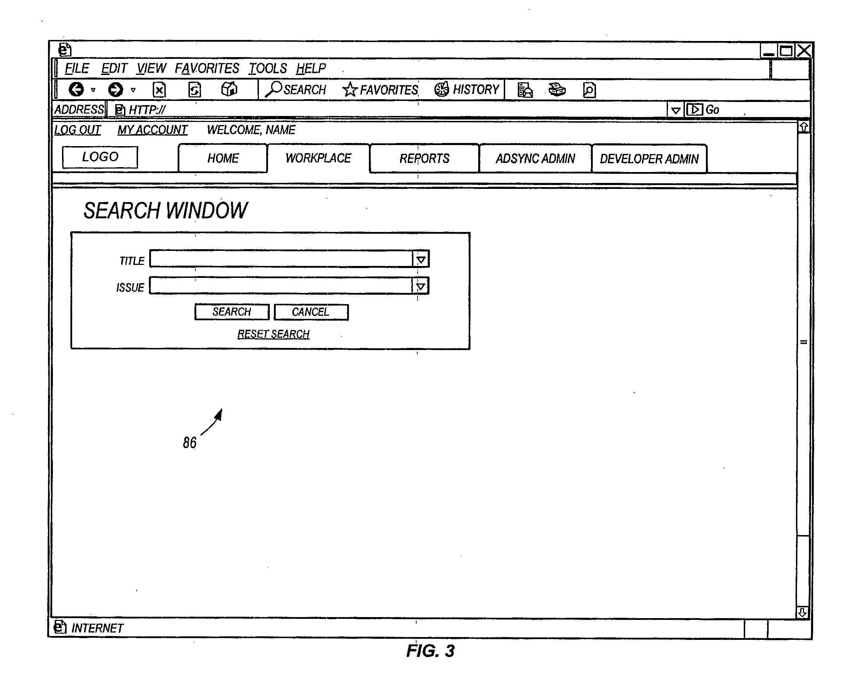

FIG. 2 illustrates an embodiment of the software program 78. The software program 78 includes a search module 82, which can locate data and information that resides in the database 70 based on keywords or other search mechanisms. FIG. 3 illustrates an embodiment of a search screen 86 that utilizes the search module 82.

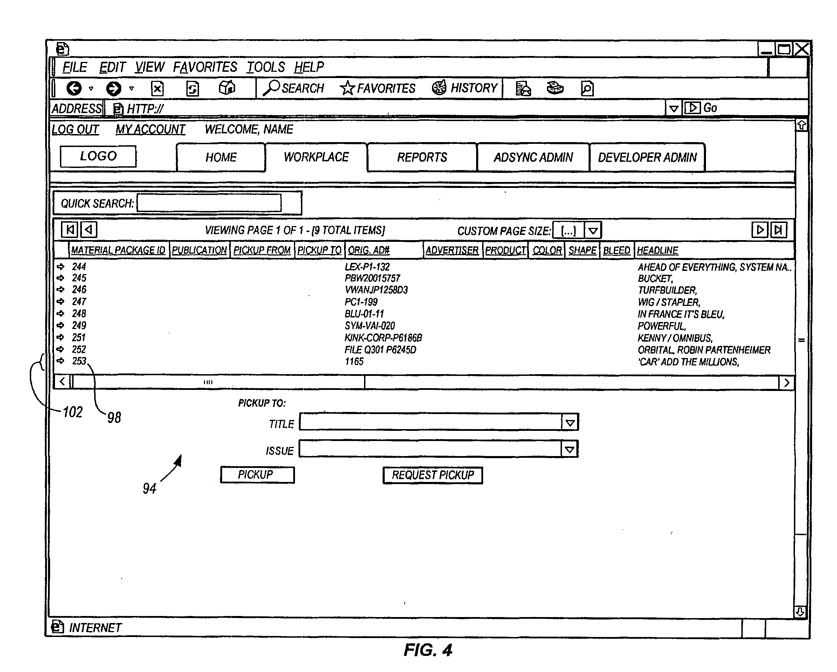

The software program 78 also includes an advertisement data module 90. FIG. 4 illustrates an embodiment of an advertisement data screen 94 that utilizes the advertisement data module 90. The advertisement data module 90 includes advertisement records 102, which include data used to generate an advertisement in a printed publication. An advertisement record 102 can include a material package identification 98, the name of the publication in which the advertisement is planned to appear, an original identification number used by the advertisement agency to identify the advertisement materials, the name of the company or person sponsoring the advertisement, the product displayed or presented in the advertisement, the associated colors of the advertisement, the associated shape and size of the advertisement, bleed status, and the headline of the advertisement or name of the advertisement. The advertisement record 102 includes additional information used to identify the advertisement materials, such as disks, proofs, meta-data, images, films, and the like.

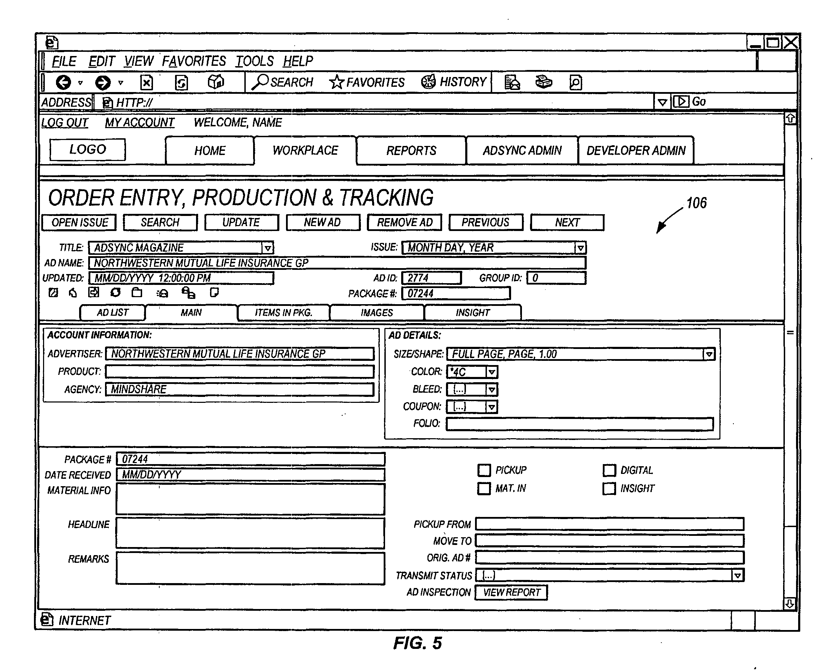

Generally, the service provider receives a package from an advertising agency that contains the advertisement materials. The service provider 22 generates the advertisement record 102, by entering and saving all of the advertisement materials and identification of the advertisement materials in the advertisement data module 90 on the server 66 using order entry screens 106, 110, and 114 as illustrated in FIGS. 5-7. After the advertisement record 102 is generated, the client can use the computer terminals 38 at the client system 14 to view, edit, and save additional information to the record.

The client reviews the advertisement record 102 added to the advertisement data module 90 to verify that the information and data entered for the advertisement record 102 is correct and that the advertisement will run in the specified printed publication(s). The client can add or link additional information (e.g., an advertisement image) to the advertisement record 102 (see FIG. 7). After the client has completed the review and edit process, the client saves the changes to and/or approves the advertisement record 102. The advertisement data module 90 generates a unique identification for the advertisement record 102 noted as the material package identification 98. The advertisement record 102 is highlighted, marked, or identified as being reviewed and approved by the client as illustrated in FIG. 8.

The service provider views the reviewed and approved advertisement record 102 and can create and/or modify the image of the advertisement that corresponds to the advertisement record 102 for use in print production. The production details of the advertisement record 102 are maintained on a production screen 114 as illustrated in FIG. 9.

Referring back to FIG. 2, the software program 78 includes a report module 118 that can generate any number of reports based on the data in the advertisement data module 90. The software program 78 also includes an administration module 122 that can be accessed by certain service provider personnel to set up new users, passwords, security access, and conduct other administrative tasks.

The software program 46 includes a configuration module 126, a cost optimization module 130, a USPS calculation module 134, and a miscellaneous copy module 138 as illustrated in FIG. 10. The software program 46 can integrate with and interface with the software programs 42 and 78 to provide additional functionality in the management of advertisements. The software program 46 is available as Impoze™, also available from the Impoze Partnership.

FIG. 11 illustrates a flow chart of general activities that are performed by the client and the service provider and their interactions with the integrated advertising management system 10. The client or publisher sells (at 150) advertising space in its printed publications. The publisher enters (at 154) the sales data and advertising details in the software program 42. The service provider receives (at 158) the advertisement materials from an advertising agency on behalf of the company or person sponsoring the advertisement. The service provider enters (at 162) the advertisement materials in the advertisement data module 90 of the software program 78 to generate an advertisement data record 102. The software program 42 electronically notifies (at 166) the publisher of the new advertisement data record 102. The publisher reviews the advertisement data record, links the record to the sales data (if appropriate), edits the record (if necessary), and approves (at 170) the record. The software program 42 generates (at 174) a unique identifier for the advertisement data record 102. The software program 78 electronically notifies (at 178) the service provider that the advertisement data record 102 has been approved. The service provider generates (at 182) production information for the advertisement data record 102. The service provider generates (at 186) a printed publication including the advertisement.

FIG. 12 illustrates a flow chart of an embodiment of a method of operation of the integrated advertising management system 10. The servers 30, 50, and 66 operate to perform a synchronization process of the data exchange between the software programs 42 and 78. The databases 34 and 70 store each of the advertisement data records 102. The publisher updates (at 190) an advertisement data record 102. The updated advertisement data record 102 is transmitted (at 194) to the automated system 18. The server 50 compares (at 198) the updated data record 102 to the previously stored advertisement data record 102. The server 50 determines (at 202) if the advertisement data record 102 has been updated based on the comparison and activates (at 206) a flag for that advertisement data record 102. The server 66 periodically queries (at 210) the server 50 for new or updated records 102. The server 66 determines (at 214) which records 102 have been updated based on whether the flag for that record 102 has been activated. The server 66 overrides (at 218) the previous version of the advertisement data record 102 as stored in the database 70 with the updated advertisement data record 102 and deactivates (at 222) the flag. The system 10 operates in the reverse as well. The service provider can update an advertisement data record 102, which will be detected at the server 46. The client system 14 and the service provider system 22 communicate via the automated system 18 in this manner to synchronize the advertisement data records 102 such that the databases 34 and 70 only contain the most updated version of the record 102.

FIG. 13 illustrates an advertising management system 250 according to one embodiment of the invention. The advertising management system 250 includes a network 254 that communicates with a server 258 and a database 262. The advertising management system 250 is generally operated by and managed by a printer of printed publications, e.g., magazines, signatures, brochures, and the like. For example, the advertising management system 250 can be manages by Quad/Graphics, Inc. of Sussex, Wisconsin under its ARMDirect suite of services, but the advertising management system 250 can be managed and/or operated by an business entity or person. The network 250 can be built according to any networking technology or topology or combinations of technologies and topologies and can include multiple sub-networks. Connections between the systems shown in FIG. 13 can be made through local area networks ("LANs"), wide area networks ("WANs"), public switched telephone networks ("PSTNs"), Intranets, the Internet, or any other suitable networks.

The advertising management system 250 also includes a plurality of computer terminals 266. The database 262 stores data and information related to advertisements and the operations of the advertising management system 250. The database 262 can run Microsoft SQL Server 2000. The advertising management system 250 can include fewer or more computer terminals 266 than illustrated in Fig. 13. The computer terminals 266 can include typical hardware such as a processor, I/O interfaces, and storage devices or memory. The computer terminals 266 can also include input devices such as a keyboard and a mouse. The computer terminals 266 can further include standard output devices, such as a monitor. In addition, the computer terminals 266 can include or be connected to and communicate with peripherals, such as a printer and a scanner. The computer terminals 266 can include software such as an operating system, a display application, a communications application, and other software as necessary or desired.

The server 258 can include an operating system for running various software programs an/or a communications application. The server 258 can be a standard Windows file server. The server 258 includes a software program 270 that operates to communicate with the network 254. The software program 270 also operates to communicate with and be accessed by the computer terminals 266. The software program 270 can be the same as or similar to the software program 42 and 78 discussed above.

The advertising management system 250 can be accessed by computer terminals 274, which can be the same as or different than the computer terminals 274. The computer terminals 274 can include typical hardware such as a processor, I/O interfaces, and storage devices or memory. The computer terminals 274 can also include input devices such as a keyboard and a mouse. The computer terminals 274 can further include standard output devices, such as a monitor. In addition, the computer terminals 274 can include or be connected to and communicate with peripherals, such as a printer and a scanner. The computer terminals 274 can include software such as an operating system, a display application, a communications application, and other software as necessary or desired. Generally, the computer terminals 274 are operated by a client, such as, a publisher, an agent of the publisher, or any type of business entity or person.

In this embodiment of the invention, the computer terminals 274 can access the advertisement data module 90 of the software program 270 to view, edit, and save changes to the advertisement records 102. The advertisement records 102 include the most up-to-date information for viewing and manipulating by the computer terminals 266 and 274. The users of the computer terminals 274 have been authorized and given a unique username and password to access the network 254.

The two-way arrows in FIG. 13 generally represent two-way communication and information transfer between the network 254, the server 258, and the database 262 and other components shown in FIG. 13.

The integration of the use of the advertisement management software by the service provider and the client can increase efficiency, streamline the production process, and save time and costs.

Various features and advantages of the invention are set forth in the following claims.

## Claims

1. An advertising management system comprising:
an automated system including a server and a database;
a client system operable to communicate with the automated system; and
a service provider system operable to communicate with the automated system;
wherein the client system and the service provider system bilaterally communicate via the automated system to exchange real-time advertisement data.

2. The system as set forth in claim 1, wherein the server is operable to receive advertisement data from the client system and the service provider system and synchronize the advertisement data before transmitting the advertisement data to the service provider system and the client system, respectively.

3. The system as set forth in claim 1 or 2, wherein the server is operable to receive data from the client system and determine if the data has been modified before transmitting the data to the service provider system.

4. The system as set forth in claim 1, 2 or 3, wherein the server is operable to receive data from the service provider system and determine if the data has been modified before transmitting the data to the client system.

5. The system as set forth in any preceding claim, wherein the client system and the service provider system each include a server having a computer program embodied in a computer-readable medium, the computer program comprising an advertisement data module that maintains the advertisement data.

6. A computer-implemented method of integrating advertisements between a client and a service provider, the method comprising:
generating an advertisement data record
the client electronically receiving the advertisement data record;
the client approving the advertisement data record; and
the service provider electronically receiving the approved advertisement data record and generating a production plan.

7. The method as set forth in claim 6, wherein the service provider receives advertising materials and generates the advertisement data record based on the advertising materials.

8. The method as set forth in claim 6 or 7, further comprising synchronizing the advertisement data record before transmitting the advertisement data record to one of the client and the service provider.

9. The method as set forth in claim 8, wherein the act of synchronizing the advertisement data record includes comparing the advertisement data record to a previous version of the advertisement data record, determining whether the advertisement data record has been modified, and if the advertisement data record has been modified, saving the updated advertisement data record.

10. A computer-implemented method of integrating advertisements between a client and a service provider, the method comprising:
generating an advertisement data record;
transmitting the advertisement data record to the client;
receiving an approved advertisement data record from the client; and
generating a production plan.

11. A computer-implemented method of generating advertisements in a printed publication, the method comprising:
generating an advertisement data record;
automatically updating the advertisement data record when the advertisement data record is modified; and
displaying the updated advertisement data record at two separate entities regardless of which entity updated the advertisement data record.

12. The method as set forth in claim 11, further comprising activating an identifier in the advertisement data record when the advertisement data record is updated.

13. The method as set forth in claim 11 or 12, further comprising comparing the advertisement data record to a previous version of the advertisement data record.

14. The method as set forth in claim 11, 12 or 13 wherein a service provider receives advertising materials and generates the advertisement data record based on the advertising materials.

15. A carrier medium carrying computer readable instructions configured to cause a computer to carry out a method according to any one of claim 10 to 14.

16. A computer apparatus comprising:
a program memory containing processor readable instructions; and
a processor configured to read and execute instructions stored in solid program memory; wherein the processor readable instructions comprise instructions configured to cause the computer to carry out a method according to any one of claims 10 to 14.

17. An advertising management system comprising:
an automated system including a server and a database;
a client system for maintaining advertisement data;
a service provider system operable to communicate with the client system via the automated system, the server including a computer program operable to synchronize data transmitted between the client system and the service provider system.

18. The system as set forth in claim 17, wherein the server is further operable to compare the advertisement data record to a previous version of the advertisement data record, determine whether the advertisement data record has been modified, and if the advertisement data record has been modified, save the updated advertisement data record.

19. An advertising management system comprising:
a first entity;
a second entity; and
a database operable to transmit advertising data between the first entity and the second entity, the database operable to synchronize the advertising data between the first entity and the second entity, the first entity and the second entity operable to view the same advertising data regardless of whether the first entity or the second entity has made changes to the advertising data.

20. An advertising management system comprising:
a network, a server, and a database operated by a first entity to manage advertising data; and
a computer terminal operated by a second entity, the computer terminal operable to access the network to view the same advertising data that the first entity views.
